# EUROPEAN PATENT SPECIFICATION

(11) **EP 4 631 719 B1**
(45) Date of publication and mention of the grant of the patent: **09.09.2026**
(21) Application number: 24875711.4
(22) Date of filing: 20.03.2024
(51) Int. Cl.: B32B 7/12, B32B 7/027, B32B 15/04, B32B 15/18, B32B 15/20, B32B 27/06, B60R 13/10

(54) **LAMINATE FOR VEHICLE NUMBER PLATE**
LAMINAT FÜR FAHRZEUGKENNZEICHEN
STRATIFIÉ POUR PLAQUE D'IMMATRICULATION DE VÉHICULE

(30) Priority: 01.03.2024 CN 202410240315
(43) Date of publication of application: 15.10.2025
(73) Proprietor: Nippon Carbide Industries (Hangzhou) Co., Ltd., Hangzhou, Zhejiang 311231 (CN)
(72) Inventor: JIANG, Jihui, Hangzhou, Zhejiang 311231 (CN); XIAO, Yuetang, Hangzhou, Zhejiang 311231 (CN)
(74) Representative: Hoefer & Partner Patentanwälte mbB
(86) International application number: PCT/CN2024/082633
(87) International publication number: WO 2025/179646

(56) References cited:
- AT-B- 310 587
- AU-A4- 2007 100 718
- CA-A1- 2 204 628
- CN-A- 101 180 179
- CN-A- 101 180 179
- CN-A- 101 369 033
- CN-A- 101 819 291
- CN-A- 103 097 133
- CN-A- 108 891 182
- CN-A- 108 891 182
- CN-U- 209 813 474
- JP-A- 2010 247 365
- US-A- 4 983 436

## Description

### TECHNICAL FIELD

The present disclosure pertains to the field of manufacture of motor vehicle license plates, and specifically relates to a motor vehicle license plate with a transparent hot stamping layer, wherein the foil stamping layer is transparent and serves as a protective layer of the license plate.

### BACKGROUND

Motor vehicle license plates have been compulsorily used for identification of motor vehicles, and are typically marked with characters (patterns, symbols, text/letters or digits) for registration or verification of identity or other (legal) information.

There is a variety of motor vehicle license plates around the world, and protective layers are widely used to safeguard the inner layer with the characters, for example:
Some motor vehicle license plates are made by applying paint on metals, where both the background color and the characters on a license plate are colored with paint, so the license plate as a whole does not have retro-reflective properties. Some motor vehicle license plates are made by bonding various non-retroreflective films to metals, and these films may have various printed patterns or text and then covered with a protective film or roller-coated with a varnish ink layer as a protective layer.

Furthermore, some motor vehicle license plates are made by bonding reflection materials to metals (for example, Cited Literature 1 provides a typical structural diagram for reflection material). Inside the reflection materials may a colored pattern be further printed, and the characters for identification are opaque and colored by foil stamping. In other cases, the motor vehicle license plates are made by bonding reflection materials to metals, printing colored patterns on the exterior of the reflection materials, and then applying a protective film or roller-coating varnish ink as a protective layer.

At present, motor vehicle license plates with more complex patterns are used in some countries in Africa and Americas. Some of the patterns are inkjet printed on the exteriors of reflection materials, but the ink for the inkjet printing has poor weather resistance due to lack of a protective film and fades seriously within two or three years. In order to improve the weather resistance, sometimes a protective film is applied or a layer of varnish ink is roller-coated after inkjet printing to enhance the weather resistance.

Additionally, in the aforementioned methods for applying a protective film as a protective layer, the protective film typically has a certain thickness and is a pressure-sensitive adhesive layer, and the surface film and the inner layer are bonded to each other by heating and pressurizing, thereby providing protection.

In other aspects, it is known that there are many methods for manufacturing license plates. One common method is the embossing approach, by which the reflection material cannot show undesirable phenomena such as cracks after embossing. Subsequently, the characters and borders can be colored by foil stamping or roller coating; alternatively, only the background is colored, while the characters and borders are uncolored.

Another method is the peel-off approach. That is, the reflection material characters and the background color are disconnected after embossing. Afterwards, the reflection material on the characters and borders is peeled off and removed from the substrate plate. The substrate plate used in this manner is generally colored, for example, black, blue or red. Alternatively, the license plates used in some countries are made by firstly inkjet printing a pattern, and peeling off the reflective film on the characters and borders from the substrate plate, instead of coloring the characters and borders by roller coating or foil stamping.

In the process of manufacturing license plates by the embossing approach, the mechanical impact from embossing may lead to separation of the protective film on the reflection material from the glue of the reflection material or lead to cracking of the protective film, or even cracking of the reflection material because of the difference in tensions of the protective film and the reflection material, etc. This would inevitably affect the properties or service life of the motor vehicle license plate.

In the peel-off approach, on the one hand, the stickiness of the glue layer for connecting the reflection material to the metal substrate is required not to be too high, or the glue will remain on the substrate plate during peeling. On the other hand, since the reflection material and the protective film thereon have different tensions and the protective film is relatively thick and not easily broken during embossing, it is also possible to cause the reflective film as a whole to be detached from the substrate plate during peeling.

Both of the aforementioned methods are intended to address the demand of a protective film for a motor vehicle license plate having an inkjet-printed pattern on the exterior of the reflection material.

In addition, when varnish ink is used as a protective layer, it is usually applied by roller coating. The varnish ink has the following drawbacks: firstly, the ink has a heavy odor and emits many volatile organic compounds (VOCs), which significantly affect the environment. Moreover, the varnish ink cannot be roller-coated before the characters are embossed because the stretchability of the ink would cause crack or detachment in the embossing process. However, when the vanish ink is roller-coated or sprayed after embossing, the ink is easily accumulated due to unevenness, and the uneven surface thickness will affect the retroreflective coefficient of the reflection material, that is, reducing the retroreflective coefficient. Furthermore, as the ink needs to be dried, energy and space are required to dry large batches of motor vehicle number plates. CN 101 571 607 A discloses reflective membranes for license plates. CN 108 891 182 A discloses a reflective laminate for a motor vehicle number plate, comprising in this order a protective support layer, an adhesive layer, a glass bead layer, a color layer, a metal layer and a hot-melt resin layer. CN 101 180 179 A discloses laminate bodies for name plates with a metallic luster, comprising in this order a transparent substrate, an adhesive layer, a transparent resin film, a metal deposition layer, and an anti-corrosive layer. JP 2010 247365 A discloses a retro-reflector laminate, which may be used as a license plate for automobiles.

### SUMMARY

### Technical Problem

As described above, in the case of using an ink layer as a protective layer, there are limitations due to various factors such as environmental protection, preparation process, energy consumption, and site occupation.

Additionally, in the case where a pattern needs to be sprayed on the surface of the reflection material, a common practice is to print or spray a pattern on one surface of the reflection material and then adhere the other surface of the reflection material to the metal plate surface of the license plate. Subsequently, a protective film having a pressure-sensitive adhesive layer is adhered to the surface with the pattern to form a protective layer. The license plate is then wholly embossed to get symbols such as the digits protruded. After constant practice, the following issues have been found in this process:
In some cases, when adhered to the surface of the reflection material, the protective layer also needs to be cut or trimmed as necessary, or after the embossing step of the license plate, the reflection material together with the protective layer needs to be cut and peeled off at the time of embossing at the portion where the reflection material is not needed (*e.g.,* the protruding portion). Therefore, this requires the protective layer itself to have good cuttability. However, during the embossing operation after the protective layer has been applied, the protective layer and the reflective layer are embossed concurrently. In order to ensure that the protective layer does not crack at the non-embossed portion, the protective layer is further required to possess certain toughness. Nevertheless, when a pressure-sensitive adhesive is used as an adhesive layer for the protective layer, there are currently challenges to achieve both the cuttability and toughness.

Furthermore, it is also out of the need to meet the requirements for the above two cutting processes that a pressure-sensitive adhesive is usually used as the adhesive layer in contact with the reflection material in the conventional protective layer. Such an adhesive helps meet the cuttability requirements, but as a matter of fact, it is also easy to cause the protective layer to separate from the surface of the reflection material during embossing as the adhesive is somewhat re-peelable.

Therefore, in view of the above deficiencies in the prior art, the primary objective of the present disclosure is to provide a laminate usable for a license plate of a vehicle (*e.g.,* a motor vehicle or a non-motor vehicle), the laminate comprising a protective layer, a reflection material layer, and a metal substrate layer, wherein the protective layer comprises a transparent resin layer and an adhesive layer. Moreover, the adhesive layer primarily comprises a hot-melt adhesive. Meanwhile, by optimizing the properties such as the thicknesses of the adhesive layer and the transparent resin layer, this laminate has good workability in the manufacture of license plates. That is, the protective layer in the embossed area is easily cut off during cutting and embossing and the embossing process would not undesired cracks in the protective layer itself or between the protective layer and the reflection material layer.

### Solution to Problem

The aforementioned technical problem can be solved by implementing a laminate for a vehicle license plate, wherein the laminate comprises:
a protective layer, a reflection material layer, and a metal substrate layer in this order, wherein
the protective layer comprises a transparent resin layer having a thickness of 0.5 to 20 µm and an adhesive layer having a thickness of 0.5 to 20 µm, and
the adhesive layer comprises a hot-melt adhesive having a melting point of 110°C to 250°C.

Preferred embodiments are subject-matter of the dependent claims.

### Advantageous Effects of the Invention

By implementing the aforementioned technical solutions, the present disclosure could achieve the following technical effects:
(1) By using a hot-melt adhesive with specific properties (instead of the currently available pressure-sensitive adhesive) as an adhesive layer in the protective layer, this could guarantee that the adhesive layer at the cut portion and the embossed portion is excellent in cuttability at the time of cutting the protective layer and embossing the laminate, while ensuring that the protective layer/reflection material layer at the other portions does not crack.
(2) By optimizing the thickness of the transparent resin layer and the thickness of the adhesive layer in the protective layer, the toughness of the entire protective layer could be achieved while ensuring its cuttability.
(3) The method of the present disclosure can avoid using the varnish ink as a protective layer, thereby avoiding volatilization of harmful gases and reducing energy consumption and site occupation.

### BRIEF DESCRIPTION OF THE DRAWINGS

FIG. 1: a structural diagram for a laminate according to one specific embodiment of the present disclosure
   A: protective layer; B: reflection material layer; C: metal substrate layer
   1: transparent resin layer; 2: adhesive layer (hot-melt adhesive); 3: surface layer; 4: support layer;
   5: lens array layer; 6: focusing layer; 7: reflective layer; 8: glue layer.
FIG. 2: a structural diagram for the reflection material layer in a laminate according to one specific embodiment of the present disclosure
   2-1: surface layer; 2-2: air chamber; 2-3: lens array layer (glass beads);
   2-4: reflective layer; 2-5: support layer; 2-6: glue layer
FIG. 3: a structural diagram for the reflection material layer in a laminate according to one specific embodiment of the present disclosure
   3-1: surface layer; 3-2: lens array layer (prism); 3-3: reflective layer;
   3-4: glue layer
FIG. 4: a structural diagram for the reflection material layer in a laminate according to one specific embodiment of the present disclosure
   4-1: surface layer; 4-2: lens array layer (prism); 4-3: air chamber;
   4-4: support layer; 4-5: glue layer
FIG. 5: a structure of an embossed laminate according to one specific embodiment of the present disclosure
   A: protective layer; B: reflection material layer; C: metal substrate layer

### DETAILED DESCRIPTION

The following is a detailed description of the present disclosure. The technical features described below will be described based on the representative embodiments and specific examples of the present disclosure, but the present disclosure is not limited thereto. It should be noted that:
The numerical range represented by "numerical value A to numerical value B" used in the present specification refers to the range including the endpoint values A and B.

The numerical range represented by "greater" or "less" used in the present specification refers to the numerical range including this number.

In the present specification, the term "may" involves both the meaning of doing something and the meaning of not doing something.

In the present specification, the term "optionally" or "optional" means that some substances, components, execution steps, application conditions and other factors are used or not used.

In the present specification, the term "basically" or "substantially" means that the standard deviation from the theoretical model, theoretical data or target data is within a numerical range of 5%, preferably 3%, more preferably 1%.

The term "comprising" and/or "including", when used in the present specification, indicates the existence of features, steps, operations, devices, components and/or combinations thereof.

Phrases such as "some specific/preferred embodiments", "other specific/preferred embodiments", "embodiments" and the like referred to in the present specification mean that particular elements (for example, features, structures, properties and/or characteristics) described in relation to this embodiment are included in at least one of the embodiments described herein, and may or may not exist in other embodiments. Additionally, it should be appreciated that the elements may be combined in any suitable manner into various embodiments.

The present disclosure provides, first and foremost, a laminate for a vehicle license plate, which can be processed into a final license plate by a subsequent processing method such as embossing.

The laminate comprises: a protective layer, a reflection material layer, and a metal substrate layer in this order. The term "in this order" used herein refers only to the order of lamination, rather than to limit that the laminate comprises only the above three layers.

### (Vehicle)

The vehicle according to the present disclosure may be a motor vehicle, a non-motor vehicle, or an additional vehicle with various special functions.

Preferably, the vehicle of the present disclosure refers to a motor vehicle, including motor vehicles powered by petrochemical energy and motor vehicles powered by new energy (hydrogen energy, lithium batteries, and hybrid power), etc.

### (Protective Layer)

The protective layer of the present disclosure is designed mainly to protect the laminate, in particular to protect the pattern on the surface of the reflection material layer of the laminate to increase the service durability of the final vehicle license plate.

Such a protective layer mainly comprises a transparent resin layer as the outermost layer of the laminate and an adhesive layer for bonding this transparent resin layer and the reflection material layer.

### Transparent Resin Layer

The transparent resin layer usable in the present disclosure is not particularly limited in principle as long as it provides adequate light transmittance. In some specific embodiments, the material for the transparent resin layer includes a transparent resin and optional auxiliary agents.

In some specific embodiments of the present disclosure, the transparent resin may be one or more selected from a polyester-based resin, a polycarbonate-based resin, a polyolefin-based resin, a polyacrylate-based resin, and modified products thereof.

Polyester-based resin may be a condensate of aliphatic, aromatic or alicyclic diol and diacid, preferably, PET, PBT, etc.

Polyolefin-based resin may be a homopolymer of olefin, a copolymer of multiple olefins, or a copolymer of olefin and an additional polymerizable monomer, such as an ethylene-vinyl acetate copolymer.

Acrylate resin may be a polymer of one or more (meth)acrylates.

The above-mentioned modification may include modifications of the main chains or side chains of the aforementioned resins. In some preferred embodiments, the above modification includes introduction of a halogen atom, an organosilicon structure or the like.

Furthermore, auxiliary agents usable for forming the transparent resin layer are not particularly limited in principle. In some specific embodiments, these auxiliary agents may include mixed additives of one or more of ultraviolet protective agents, antioxidants, curing agents, etc. Additionally, in some cases, the transparent resin layer may be shipped with a protective release layer on the surface thereof, and auxiliary agents such as silicone oil, talc, and wax may further be used in order to ensure certain releasability.

The thickness of the transparent resin layer of the present disclosure may be controlled within the range of 0.5 µm to 20 µm, preferably 0.8 µm to 10 µm, most preferably 1 µm to 5 µm. If the transparent resin layer is too thin, it cannot provide good mechanical properties and weather resistance, for example, this may cause cracking of the transparent resin layer when manufacturing a license plate in the subsequent embossing step. If the transparent resin layer is too thick, this may lead to poor cuttability.

The light transmittance of the transparent resin layer of the present disclosure refers mainly to the total light transmittance of light in the visible light band. In some preferred embodiments, where the above-mentioned thickness is satisfied, the light transmittance of the transparent resin layer may be 70% or greater, more preferably 80% or greater, further preferably 85% or greater.

### Adhesive Layer

The adhesive layer of the present disclosure is used for bonding the aforementioned transparent resin layer and (the surface layer of) the reflection material layer. The adhesive layer of the present disclosure primarily comprises a hot-melt adhesive.

In some specific embodiments, the content of the hot-melt adhesive in the adhesive layer is 80 mass% or more, preferably 90 mass% or more, further preferably 95 mass% or more.

In the most preferred embodiment, the adhesive layer of the present disclosure is substantially fully formed of a hot-melt adhesive.

The hot-melt adhesive of the present disclosure has a melting point of 110°C to 250°C, preferably 130°C to 220°C, more preferably 140°C to 210°C. If the melting point is too low, this may lead to poor cuttability of the adhesive layer, also lead to cracking of the transparent resin layer itself in the embossing process, and may also lead to cracking between the transparent resin layer and the reflection material layer. However, if the melting point is too high, this may lead to difficulties in processing or use or uneven adhesiveness.

The "melting point" in the present disclosure is a temperature at which the viscosity of the hot-melt adhesive reaches the lowest point when heated from a low temperature to a high temperature.

Furthermore, the thickness of the adhesive layer of the present disclosure may be 0.5 µm to 20 µm, preferably 0.8 µm to 10 µm, most preferably 1 µm to 5 µm. If the thickness is too low, this results in poor mechanical strength and adhesiveness. If the thickness is too high, this may cause uneven adhesiveness at the time of bonding and poor cuttability.

Compared with the pressure-sensitive adhesives commonly used in the prior art, the aforementioned hot-melt adhesive used in the present disclosure not only has better adhesiveness but also can balance the relationship between toughness and cuttability and has better workability.

### (Reflection Material Layer)

Reflection material layers usable in the present disclosure are not particularly limited in principle and may be commercially-available conventional ones in this field.

These reflection material layers may be glass beads-enclosed reflective films, glass bead capsule reflective films or prism reflective films available in the market, for example, NIKKALITE^{™} SCL, ELG, FMG, UL, CRG, ECE reflection materials or other grades manufactured by NIPPON CARBIDE INDUSTRIES (HANGZHOU) CO., LTD. That is, the surface of the reflection material may be PVC or PU, acrylic resin, PMMA or PC-based reflection material, and the retroreflective structure may be a bead type or a prism type.

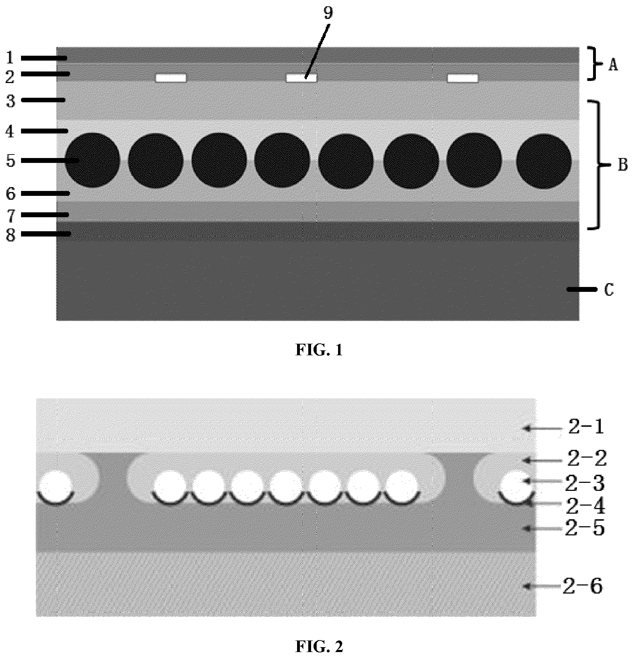

In some preferred embodiments, the reflection material layer includes a surface layer allowing for formation of a pattern, a support layer, a transparent array layer, a focusing layer, a reflective layer, and a glue layer (as shown in FIG. 1).

### Surface Layer

The aforementioned surface layer may typically be a transparent layer and this surface layer allows various patterns to be formed by such methods as printing or such patterns can also be embedded into this transparent layer.

For such a surface layer, in some specific embodiments, its material may be at least one selected from acrylic resin, alkyd resin, fluororesin, vinyl chloride resin, polyester, polyurethane resin, polyethylene terephthalate, and polycarbonate, preferably at least one of acrylic resin, polyester and vinyl chloride resin in consideration of weather resistance and workability, and preferably acrylic resin in consideration of conformity at the time of coloring or dispersibility at the time of coloring with a colorant.

In other specific embodiments, a colored pigment or dye may be added to the resin in the surface layer, and the pigment and dye are preferably transparent pigments. Pigment- or dye-based colorants may be set forth below:
yellow: colorants such as isoindolinones, isoindolines, quinophthalones, anthraquinones, pyrazolones, flavanones, benzimidazolones, and azo nickel;
red: colorants such as anthraquinones, perylenes, quinacridones, and indigos;
blue: colorants such as phthalocyanines, onium vat dyeing, anthraquinones, and cobalt;
green: colorants such as phthalocyanines, emerald green, chromium oxides, and cadmium;
tawny: iron oxide-based colorants, or combinations of isoindolinone-based yellow colorants, perylene-based red colorants, and phthalocyanine-based blue colorants;
orange: single colors including anthraquinones, pyrazolones, violanthrones, perylenes, and quinacridones, or combinations of isoindolinone-based yellow colorants and perylene-based red colorants;
white: colorants such as phthalines, zinc, and lead;
black: colorants such as carbon black, aniline black, perylene black, and titanium black.

Furthermore, in some specific embodiments, the thickness of the surface layer may be from 10 µm to 150 µm, preferably from 20 µm to 60 µm, most preferably from 30 µm to 50 µm.

### Support Layer

Similar to the aforementioned surface layer, the support layer may also be a transparent layer, and its material may be at least one selected from acrylic resin, alkyd resin, fluororesin, vinyl chloride resin, polyester resin, polyurethane resin, and polycarbonate, preferably at least one of acrylic resin, polyester and vinyl chloride resin in consideration of weather resistance and workability, and preferably acrylic resin in consideration of conformity at the time of coloring or dispersibility at the time of coloring with a colorant.

Likewise, the support layer may contain the same colored pigment or dye as that in the surface layer.

### Lens Array Layer

The lens array layer of the present disclosure may be a lens array layer formed by light-transmitting beads or prisms. In some specific embodiments, the lens array layer is at least partially embedded in the upper and lower layers adjacent thereto, for example, the lens array layer is partially embedded in both the support layer and the focusing layer which will be described below.

Furthermore, for the lens array layer of the present disclosure, it is preferable to use the lens array as the structural layer having retroreflective properties.

In some specific embodiments, the lens elements included in the lens array are of any shape having the refractive function, such as light-transmitting beads or prisms. In some specific embodiments, the light-transmitting beads may be spherical, rodlike, ellipsoidal or any combination thereof. In other specific embodiments, the prisms are serrated (triangular) prisms.

The material of the beads or prisms is composed of at least one of glass, ceramics, polymers, and minerals. In some preferred embodiments, their refractive index may be 1.7 to 2.5, most preferably 2.19 to 2.21; the (long) diameter of the bead is 10 µm to 150 µm, preferably 50 µm to 110 µm, most preferably 60 µm to 110 µm.

### Focusing Layer

The focusing layer of the present disclosure is a transparent focusing layer. Its material and structure are not particularly limited in principle. It is mainly used to focus reflected light to visually improve the clarity of the reflective surface.

The material for the transparent focusing layer may include a transparent resin that may be at least one selected from acrylic resin, alkyd resin, fluororesin, vinyl chloride resin, polyester resin, polyurethane resin, and polycarbonate, preferably at least one of acrylic resin, polyester and vinyl chloride resin in consideration of weather resistance and workability, and more preferably acrylic resin.

In addition, from the standpoint of imparting focusing characteristics, there is a continuously undulant curved structure at the junction between the transparent focusing layer and the opaque layer (which will be described below), and such a curved surface is structured by concaving toward the opaque layer to provide a focusing effect.

### Reflective Layer

The reflective layer of the present disclosure may be a metallic reflective film commonly used in this field.

In some specific embodiments, the reflective layer may be a metal film, such as a film of metal aluminum (Al), silver (Ag), or gold (Au).

In other specific embodiments, the reflective layer may be a coating, namely, a highly reflective metal such as aluminum (Al), silver (Ag) or gold (Au) is coated on the surface of a metal or resin film.

### Glue Layer

The material of the glue layer of the present disclosure is not particularly limited, and may be a pressure-sensitive adhesive commonly used in this field, such as (meth)acrylic pressure-sensitive adhesives. Besides, the glue layer may also be a layer formed by a hot-melt adhesive. However, from the standpoint of re-peelability, it is preferable to use a pressure-sensitive adhesive.

In the case of using a pressure-sensitive adhesive, the thickness of the pressure-sensitive adhesive may be 10 µm to 150 µm, preferably 20 µm to 60 µm, most preferably 30 µm to 50 µm.

The hot-melt adhesive may be a PA hot-melt adhesive, a TPU hot-melt adhesive, an EVA hot-melt adhesive or a PES hot-melt adhesive. The thickness of the hot-melt adhesive may be 1 µm to 150 µm, preferably 3 µm to 40 µm, most preferably 6 µm to 30 µm.

In other specific embodiments, the reflection material layer of the present disclosure may also be of other available structures, for example, the structures shown in FIG. 2 to FIG. 4.

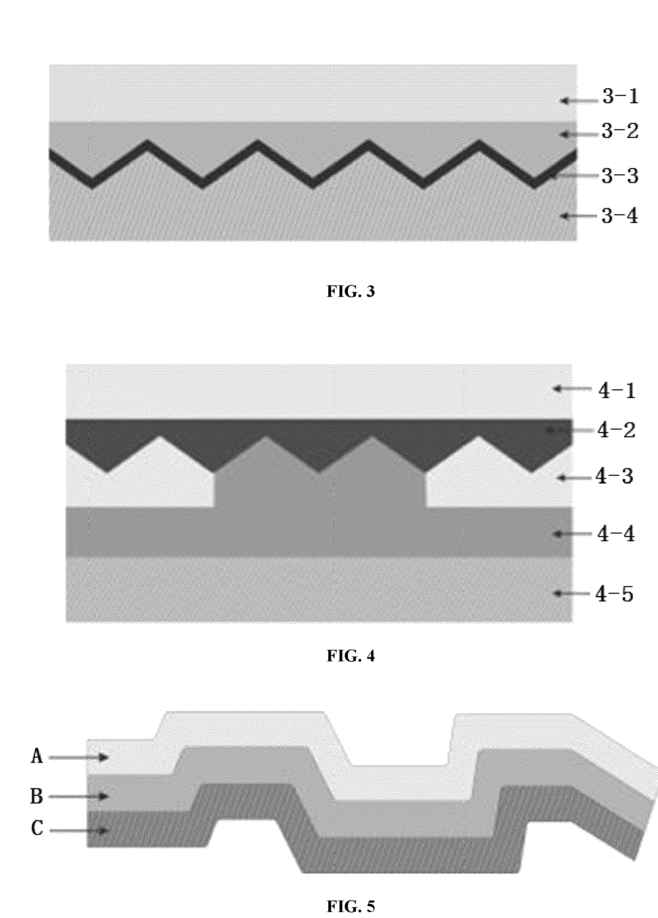

In FIG. 2 and FIG.4, the lens array layer is (partially) arranged in the air chamber, and in FIG. 3 and FIG. 4, the lens array layer is arranged in the manner of the prism layer.

### (Metal Substrate Layer)

The metal substrate layer of the present disclosure is not particularly limited in principle, and various embossable metal substrates may be selected according to demands or local regulations.

In some specific embodiments, the material of the metal substrate layer may be any one selected from aluminum, aluminum alloy, iron, iron alloy and the like.

### (Manufacture of Vehicle License Plate)

The vehicle license plate of the present disclosure is obtained by processing the aforementioned laminate. In some preferred embodiments, the above processing process comprises the following steps:
Firstly, a pattern is inkjet printed on the reflection material by a roll-to-roll inkjet printer. Then, the rolled reflection material is adhered to an aluminum plate, and the aluminum plate is blanked into a shape in a size of the license plate. Afterwards, the license plate is hot stamped on a hot stamping machine to form a protective layer, and the license plate with the hot stamped protective layer is embossed with characters on a license plate embossing machine. Further, the reflection material and the protective layer on the surface of the characters are removed. Subsequently, the characters of the license plate are colored by roller coating or foil stamping.

Specific parameters for the above technique of foil stamping the protective layer according to the present disclosure may include, for example:
The processing speed of the hot stamping machine is at 1 to 10 m/min, most preferably at 2 to 5 m/min. If the motor vehicle license plate is 1.1 mm or more in thick, it is desirable that the distance between the upper rubber heating roller and the lower metal roller of the hot stamping machine is 0.7 mm to 1 mm. The temperature for hot stamping is at 130°C to 250°C, most preferably at 180°C to 200°C. The above temperature is not the set temperature of the equipment, but the surface temperature of the rubber roller prior to foil stamping, and the temperature is stable during foil stamping.

According to the above technique, the protective layer exhibits excellent cuttability during foil stamping. After foil stamping, the foil stamped motor vehicle license plate does not show such defects as cracks or detachment when the license plate is embossed.

### Examples

The embodiments of the present disclosure will be described in detail below with reference to the examples. However, a person skilled in the art shall appreciate that the following examples are merely intended to illustrate the present disclosure and shall not be regarded as limiting the scope of the present disclosure. Where no specific conditions are indicated in the examples, conventional conditions or those recommended by manufacturers are followed. Where manufacturers are not specified for the reagents or instruments, all of them are commercially-available conventional products.

### Example 1

A desirable printed pattern was inkjet printed by the MIMAKI JV33 roll-to-roll inkjet printer on the L851200LK reflection material manufactured by NIPPON CARBIDE INDUSTRIES (HANGZHOU) CO., LTD. The reflection material was adhered to an aluminum plate for a license plate. Afterwards, a punch equipped with a semi-finished product mold of the license plate (shape and mounting holes of the license plate) was used to embossed out the semi-finished product, and then the semi-finished product was foil stamped on a foil stamping machine to form a transparent protective layer (the hot-melt adhesive having a melting point of 150°C and a thickness of 12 µm; the transparent resin layer having a thickness of 15 µm). The speed of the hot stamping machine was set at 3 m/min, and the temperature for the hot stamping roller was at 190°C. The hot stamped license plate was embossed again on the embossing machine for license plate characters. The characters of the embossed motor vehicle license plate were colored by roller coating or hot stamping.

### Example 2

The L851200LK reflection material manufactured by NIPPON CARBIDE INDUSTRIES (HANGZHOU) CO., LTD. was adhered to an aluminum plate for a license plate. Afterwards, a punch equipped with a semi-finished product mold of the license plate (shape and mounting holes of the license plate) was used to emboss out the semi-finished product. Thereafter, a desired pattern was inkjet printed by the MIKAKI UJV-160 flat inkjet printer, and foil stamped on a foil stamping machine to form a transparent protective layer (the hot-melt adhesive having a melting point of 150°C and a thickness of 12 µm; the transparent resin layer having a thickness of 15 µm). The speed of the foil stamping machine was set at 3 m/min, and the temperature for the foil stamping roller was at 190°C. The foil stamped license plate was embossed again on the embossing machine for license plate characters. The characters of the embossed motor vehicle license plate were colored by roller coating or foil stamping.

### Comparative Example 1:

The manufacturing method was the same as in Example 1, except that the melting point of the hot-melt adhesive was at 100°C.

### Comparative Example 2

The manufacturing method was the same as in Example 1, except that the thickness of the hot-melt adhesive was 25 µm.

### Comparative Example 3

The manufacturing method was the same as in Example 1, except that the thickness of the transparent resin layer was 0.2 µm.

### Comparative Example 4

The manufacturing method was the same as in Example 1, except that the thickness of the transparent resin layer was 28 µm.

### Comparison of Results:

| | Cuttability of protective layer during foil stamping | Cuttability of protective layer during embossing | Surface properties of protective layer left on surface of license plate after embossing |
|---|---|---|---|
| Example 1 | Good | Good | Good |
| Comparative Example 1 | Poor, adhesion | Poor | Good |
| Comparative Example 2 | Poor, adhesion | Poor | Poor cut edge contour |
| Comparative Example 3 | Good | Damaged on edges | Cracks on surface |
| Comparative Example 4 | Poor | Poor | Poor embossed edge contour |

## Claims

1. A laminate for a vehicle license plate, wherein the laminate comprises:
a protective layer, a reflection material layer, and a metal substrate layer in this order,
wherein
the protective layer comprises a transparent resin layer having a thickness of 0.5 to 20 µm and an adhesive layer having a thickness of 0.5 to 20 µm, and
the adhesive layer comprises a hot-melt adhesive having a melting point of 110°C to 250°C.

2. The laminate according to claim 1, wherein the protective layer is a hot stamping layer; and a pattern layer is further provided on the surface of the reflection material layer adjacent to the protective layer.

3. The laminate according to claim 1 or 2, wherein the transparent resin layer has a light transmittance of 70% or greater.

4. The laminate according to any one of claims 1 to 3, wherein a material for the transparent resin layer comprises one or more of a polyester-based resin, a polycarbonate-based resin, a polyolefin-based resin, a polyacrylate-based resin or modified products thereof.

5. The laminate according to any one of claims 1 to 4, wherein the hot-melt adhesive comprises one or more of a PA hot-melt adhesive, a TPU hot-melt adhesive, an EVA hot-melt adhesive or a PES hot-melt adhesive.

6. The laminate according to any one of claims 1 to 5, wherein the reflection material layer comprises a surface layer allowing for formation of a pattern, a support layer, a lens array layer, a focusing layer, a reflective layer, and a glue layer.

7. The laminate according to any one of claims 1 to 6, wherein a material for the metal substrate layer is any one selected from aluminum, aluminum alloy, iron, or iron alloy.

8. A vehicle license plate, wherein the vehicle license plate is obtained by processing the laminate according to any one of claims 1 to 7.

9. The vehicle license plate according to claim 8, wherein the processing comprises embossing processing.

10. The vehicle license plate according to claim 8 or 9, wherein the vehicle is a motor vehicle.

## Patentansprüche

1. Laminat für ein Fahrzeugkennzeichen, wobei das Laminat umfasst:
eine Schutzschicht, eine Reflexionsmaterialschicht und eine Metallsubstratschicht in dieser Reihenfolge,
wobei
die Schutzschicht eine transparente Harzschicht mit einer Dicke von 0,5 bis 20 µm und eine Klebstoffschicht mit einer Dicke von 0,5 bis 20 µm umfasst, und
die Klebstoffschicht einen Heißschmelzklebstoff mit einem Schmelzpunkt von 110 °C bis 250 °C umfasst.

2. Laminat nach Anspruch 1, wobei die Schutzschicht eine Heißprägeschicht ist; und ferner eine Musterschicht auf der Oberfläche der Reflexionsmaterialschicht neben der Schutzschicht bereitgestellt ist.

3. Laminat nach Anspruch 1 oder 2, wobei die transparente Harzschicht eine Lichtdurchlässigkeit von 70 % oder mehr aufweist.

4. Laminat nach einem der Ansprüche 1 bis 3, wobei ein Material für die transparente Harzschicht eines oder mehrere von einem Harz auf Polyesterbasis, einem Harz auf Polycarbonatbasis, einem Harz auf Polyolefinbasis, einem Harz auf Polyacrylatbasis oder modifizierten Produkten davon umfasst.

5. Laminat nach einem der Ansprüche 1 bis 4, wobei der Heißschmelzklebstoff eines oder mehrere von einem PA-Heißschmelzklebstoff, einem TPU-Heißschmelzklebstoff, einem EVA-Heißschmelzklebstoff oder einem PES-Heißschmelzklebstoff umfasst.

6. Laminat nach einem der Ansprüche 1 bis 5, wobei die Reflexionsmaterialschicht eine Oberflächenschicht, die die Bildung eines Musters ermöglicht, eine Trägerschicht, eine Linsenarrayschicht, eine Fokussierungsschicht, eine reflektierende Schicht und eine Klebstoffschicht umfasst.

7. Laminat nach einem der Ansprüche 1 bis 6, wobei ein Material für die Metallsubstratschicht eines ist, das aus Aluminium, einer Aluminiumlegierung, Eisen oder einer Eisenlegierung ausgewählt ist.

8. Fahrzeugkennzeichen, wobei das Fahrzeugkennzeichen durch Verarbeiten des Laminats nach einem der Ansprüche 1 bis 7 erhalten wird.

9. Fahrzeugkennzeichen nach Anspruch 8, wobei das Verarbeiten ein Prägeverarbeiten umfasst.

10. Fahrzeugkennzeichen nach Anspruch 8 oder 9, wobei das Fahrzeug ein Kraftfahrzeug ist.

## Revendications

1. Stratifié pour une plaque d'immatriculation de véhicule, dans lequel le stratifié comprend :
une couche protectrice, une couche de matériau réfléchissant, et une couche de substrat métallique dans cet ordre,
dans lequel
la couche protectrice comprend une couche de résine transparente ayant une épaisseur de 0,5 à 20 µm et une couche adhésive ayant une épaisseur de 0,5 à 20 µm, et
la couche adhésive comprend un adhésif thermofusible ayant un point de fusion de 110 °C à 250 °C.

2. Stratifié selon la revendication 1, dans lequel la couche protectrice est une couche d'estampage à chaud ; et une couche de motif est en outre prévue sur la surface de la couche de matériau réfléchissant adjacente à la couche protectrice.

3. Stratifié selon la revendication 1 ou 2, dans lequel la couche de résine transparente a une transmittance de lumière de 70 % ou plus.

4. Stratifié selon l'une quelconque des revendications 1 à 3, dans lequel un matériau pour la couche de résine transparente comprend un ou plusieurs parmi une résine à base de polyester, une résine à base de polycarbonate, une résine à base de polyoléfine, une résine à base de polyacrylate ou des produits modifiés de celles-ci.

5. Stratifié selon l'une quelconque des revendications 1 à 4, dans lequel l'adhésif thermofusible comprend un ou plusieurs parmi un adhésif thermofusible PA, un adhésif thermofusible TPU, un adhésif thermofusible EVA ou un adhésif thermofusible PES.

6. Stratifié selon l'une quelconque des revendications 1 à 5, dans lequel la couche de matériau réfléchissant comprend une couche de surface permettant la formation d'un motif, une couche de support, une couche de réseau de lentilles, une couche de focalisation, une couche réfléchissante, et une couche de colle.

7. Stratifié selon l'une quelconque des revendications 1 à 6, dans lequel un matériau pour la couche de substrat métallique est l'un quelconque choisi parmi l'aluminium, un alliage d'aluminium, le fer, ou un alliage de fer.

8. Plaque d'immatriculation de véhicule, dans laquelle la plaque d'immatriculation de véhicule est obtenue par traitement du stratifié selon l'une quelconque des revendications 1 à 7.

9. Plaque d'immatriculation de véhicule selon la revendication 8, dans laquelle le traitement comprend un traitement de gaufrage.

10. Plaque d'immatriculation de véhicule selon la revendication 8 ou 9, dans laquelle le véhicule est un véhicule à moteur.
